# EUROPEAN PATENT APPLICATION

(11) **EP 1 410 848 A1**
(43) Date of publication of application: **21.04.2004**
(21) Application number: 02710861.2
(22) Date of filing: 18.01.2002
(51) Int. Cl.: B05B 15/04, F16J 15/02, B60R 13/06, B60J 10/08

(54) **JOINT-COVER RUBBER STRIP FOR PREPARING AND PAINTING TWO ADJACENT SURFACES SEPARATED BY A HOLLOW JOINT**

(30) Priority: 19.01.2001 ES 200100135 U
(71) Applicant: Cortavitarte Perez, Daniel, 33468 Corvera de Asturias (ES)
(72) Inventor: Cortavitarte Perez, Daniel, 33468 Corvera de Asturias (ES)
(86) International application number: PCT/ES2002/000022
(87) International publication number: WO 2002/057024

(57) **Abstract**

Joint-cover rubber strip for preparing and painting two adjacent surfaces separated by a hollow joint, comprising a single-piece body (2) having a horizontal rectangular face (4) at one end which is parallel to another wider face (18). One of said faces (4) is defined by two inclined rectangular surfaces (3) and (5) and the other face (18) is provided with two inclined sides (16) and (17). The whole strip comprises a single-piece elastomer body (2) disposed in the centre of two projecting parts (8) and (9).

## Description

### Object

The present descriptive memory refers to a joint-cover rubber strip for preparing and painting two adjacent surfaces separated by a hollow joint, the evident purpose of which is to be used as an element manufactured in elastomeric_material capable of adapting in the interior of the hollow joint, sealing it and simultaneously allowing the surface preparation of the adjoining areas, specifically preventing the penetration inside the joint established and hermetically sealed by the joint-cover rubber strip from any external particles.

### Invention application field

This invention is for use in the industry dedicated to the manufacture of auxiliary appliances, devices and elements for the protection of surfaces such as joints, tapes, bands, etc.

### Invention background

Within the industry dedicated to the painting or repair of surfaces, such as the painting or the repair treatment of the surfaces of the bodywork of automobile vehicles, pieces of border tape are used, bending the edges so as not to expose the paint to the creation of borders and to make it able to prepare and paint the parts to the very edge of the surfaces that are to be painted.

As a substitution of the above-mentioned border tape, other bands provided with magnetic material on their opposite faces are used, with greater or lesser success, as well as cardboard, paper, etc.

Obviously, the quality of these system is not optimum and consequently, the time used in placing them is substantial, which implies an increase in the general operation costs or in the dedication of many hours to the preparation of the areas to be repaired, apart from the cost of the materials themselves

The solution to this problem would be the existence of a joint-cover rubber strip that adequately and hermetically seals the gap that exists between the two surfaces, being capable of adapting to the different thicknesses and hermetically sealing the gaps to prevent the entrance of particles or paint to the interior by having an element capable of exercising the relevant pressure on the walls of the joint, but not overlapping the surface that is to be treated.

It must be possible to clean the joint-cover rubber strip after use, to restore it to such conditions that permit its reuse.

However, the applicant has no knowledge of the current existence of an invention that includes the ideal features mentioned above.

### Description of the invention

The joint-cover rubber strip for preparing and painting two adjacent surfaces separated by a hollow joint proposed by the invention is, in itself, an obvious novelty that allows the performance of the surface preparation and painting of two adjoining surfaces, without any possibility of any external material passing to the interior of the joint that is being protected.

More specifically, joint-cover rubber strip to preparing and painting two adjacent surfaces separated by a hollow joint object of this invention is based on a single-piece body manufactured in elastomeric material; its perimeter includes a number of features, allowing the adaptation of one side or of its opposite side to joints of different thicknesses, having practically in its central area two angular projections that generate two diagonally rectangular faces, thanks to which the surface preparation of the surface to be treated can be performed to the very edge that is being protected.

The joint-cover rubber strip is introduced in the existing joints between two adjacent surfaces and obviously prevents the areas to be treated both vertically and horizontally and, consequently, prevents the access of any material to the interior of the joints.

### Description of the drawings

As a complement to the description being presented and for a better understanding of the specifications of the invention, one page of drawings is attached to this descriptive memory, where the following elements are displayed with an informative but not a limiting intention:
Figure 1.- Displays a perspective view of the object of the invention, concerning a joint-cover rubber strip for preparing and painting two adjacent surfaces separated by a hollow joint.
Figure 2.- Represents as an example the side of an automobile vehicle on which the object of the invention displayed in Figure 1 has been installed, protecting the existing joints between the doors of a vehicle.
Figure 3.- Displays an A-B view of the object represented in figure 2.

### Preferential realization of the invention

In view of these figures, it can be seen how the joint-cover rubber strip (1) for preparing and painting of two adjacent surfaces (21) and (22) separated by a hollow joint, is made up from a single-piece body (2) that presents on the top a configuration of three faces or facets, (3), (4) and (5), where faces or facets (3) and (5) are situated diagonally and face or facet (4) horizontally, presenting after faces and facets (3) and (5) two vertical and parallel areas (6) and (7) from the inferior edges of which two prolongations extend (8) and (9), presenting inclined or diagonal faces (10) and (11) at the top and (12) and (13) at the bottom, consequently allowing access to the edge formed by faces (7) and (11) or by the existing edges between faces (6) and (10).

At the bottom, although of a lesser width, the body (2) represents a configuration similar to the one described above, having an horizontal face (18) parallel to face (4), and two diagonal side faces (16) and (17) situated in a similar way as faces (3) and (5) that prolong from the central area or facet (4).

There are also vertical facets or faces (14) and (15) that are similar to faces or facets (6) and (7) although as they are configured in a thicker area they present a larger separation to the one that exists between faces (6) and (7), in order to fit into joints with a greater or lesser width.

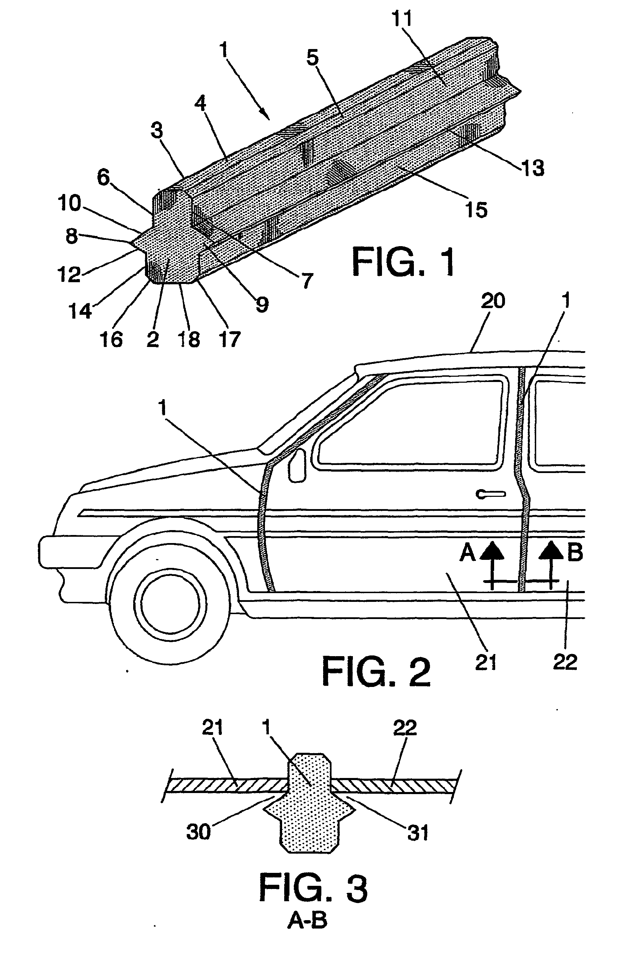

Continuing with Figure 2, it can be seen that on a vehicle (20) with doors (21) and (22) separated from each other by joints, joint-cover rubber strips (1) that hermetically seal the joint have been installed, permitting access of the painting or preparation of the surface through slopes (30) and (31), stemming from the existence of faces (10) and (11)

However, the body of the joint-cover rubber strip has been introduced inside the joints occupying faces (3), (4), (5), (6) and (7).

It is not considered necessary to extend this description so as to any expert in the matter understand the invention field and the advantages resulting from it.

Materials, form, size and elements disposal will be subject to variation, provided that it doesn't involve an alteration of the essentiality of the invention.

The terms in which this descriptive memory has been described must be always considered in an extensive and no limitative way.

## Claims

1. JOINT-COVER RUBBER STRIP FOR PREPARING AND PAINTING TWO ADJACENT SURFACES SEPARATED BY A HOLLOW JOINT, **characterized by** being based on a single-piece body (2) that presents, on one of its ends a horizontal rectangular face (4), situated parallel to a wider face (18), whose face (4) is limited by two inclined rectangular surfaces (3) and (5), while the opposite face (18) presents inclined faces (16) and (17) on its side.

2. JOINT-COVER RUBBER STRIP FOR PREPARING AND PAINTING TWO ADJACENT SURFACES SEPARATED BY A HOLLOW JOINT, according to claim 1, where the elastomeric body (2) presents, in the central lateral area, two prolongations (8) and (9), made up of coinciding inclined faces on an external view, where the top ones (10) and (11) are rectangular, the same as the faces (12) and (13) at the bottom.

3. JOINT-COVER RUBBER STRIP FOR PREPARING AND PAINTING TWO ADJACENT SURFACES SEPARATED BY A HOLLOW JOINT, according to claims 1 and 2, **characterized** because there are vertical and parallel faces (6) and (7) between the internal edge formed by faces (10) and (11) with the external edge of faces (3) and (5)

4. JOINT-COVER RUBBER STRIP FOR PREPARING AND PAINTING TWO ADJACENT SURFACES SEPARATED BY A HOLLOW JOINT, according to claims 1 to 3, **characterized** because there are vertical and parallel faces (14) and (15) between the internal edge of the faces (12) and (13) and the external edges of the faces (16) and (17).

5. JOINT-COVER RUBBER STRIP FOR PREPARING AND PAINTING TWO ADJACENT SURFACES SEPARATED BY A HOLLOW JOINT, according to claims 1 to 4, **characterized** because the thickness of the body (2) between faces (14) and (15) is considerably bigger than that which exists between vertical and parallel faces (6) and (7).
